(19) Europäisches Patentamt
European Patent Office
Office européen des brevets

(11) **EP 0 797 761 B1**

## (12) EUROPEAN PATENT SPECIFICATION

(45) Date of publication and mention
of the grant of the patent:
**27.01.1999 Bulletin 1999/04**

(21) Application number: **95940187.8**

(22) Date of filing: **15.11.1995**

(51) Int Cl.⁶: **G01N 13/02**, G01N 27/30, G01N 27/42

(86) International application number:
**PCT/EP95/04512**

(87) International publication number:
**WO 96/18877 (20.06.1996 Gazette 1996/28)**

(54) **METHOD OF DETERMINING SURFACE TENSION IN A LIQUID**

OBERFLÄCHENSPANNUNGSMESSVERFAHREN FÜR FLÜSSIGKEITEN

PROCEDE DE MESURE DE LA TENSION SUPERFICIELLE D'UN LIQUIDE

(84) Designated Contracting States:
**DE ES FR GB IT**

(30) Priority: **13.12.1994 EP 94203609**

(43) Date of publication of application:
**01.10.1997 Bulletin 1997/40**

(73) Proprietors:
• **UNILEVER N.V.**
**3013 AL Rotterdam (NL)**
Designated Contracting States:
**DE ES FR IT**
• **UNILEVER PLC**
**London EC4P 4BQ (GB)**
Designated Contracting States:
**GB**

(72) Inventors:
• **VOLANSCHI, Alexandru**
**NL-7513 EB Enschede (NL)**
• **BERGVELD, Piet**
**NL-7531 LJ Enschede (NL)**
• **OLTHUIS, Wouter**
**NL-7514 CL Enschede (NL)**
• **VAN DE HEIJDEN, René, J., T., M.**
**NL-2622 GE Delft (NL)**

(74) Representative: **Joppe, Hermina L. P.**
**Unilever N.V.**
**Patent Division**
**P.O. Box 137**
**3130 AC Vlaardingen (NL)**

(56) References cited:
WO-A-92/18680     CA-A- 1 312 219
DE-A- 2 915 956     US-A- 4 569 226

• **JOURNAL OF APPLIED ELECTROCHEMISTRY,
vol. 19, no. 5, 1 September 1989, pages 683-696,
XP000560345 GABRIELLI C ET AL:
"INVESTIGATION OF WATER ELECTROLYSIS
BY SPECTRAL ANALYSIS I. INFLUENCE OF THE
CURRENT DENSITY" cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

TECHNICAL FIELD

The present invention relates to a process of determining surface tension, to a washing process wherein the surface tension is determined, to an electrode, to a process of generating gas bubbles in an aqueous solution and to an apparatus for generating gas bubbles.

BACKGROUND & PRIOR ART

The measurement of surface tension in liquids may be used for various applications like, for instance, those employing surface active materials for wetting and washing. A distinction can be made between the static surface tension, which characterises equilibrium situations and the dynamic surface tension, which characterises situations not at equilibrium. Both types can be related to the surface active material concentration. As wetting and cleaning processes are usually far from equilibrium, it is preferred to monitor the dynamic surface tension for such processes, in particular as the concentration of surface active material may be above the CMC value and dynamic surface tension measurements can still be performed.

To determine the dynamic surface tension in a solution, an interface with changing surface area is needed and it has been found that gas bubbles may be used for this purpose for measurements in liquids. At the gas bubble surface a dynamic process of coverage with surface active material takes place; a growing bubble attracts surface active material, if present in the solution.

The prior art describes the use of pumps and tubes to generate bubbles of gas in a liquid solution to measure the dynamic surface tension. The method is generally referred to as "sparging" and has e.g. been mentioned and described in S.D. Lubetkin, Controlled particle, droplet and bubble formation, ed. D.J. Wedlock, Butherworth & Heinemann, ISBN 0 75061494 3 (1994) 159-190.

The rate at which the surface active material moves to the bubble surface is believed to be related to the concentration of the surface active material in the solution. For example, if the concentration of surface active material is low, then the rate of surface active material moving to the gas bubble surface will also be low. It is believed that the lower the surface tension of the liquid (i.e. the higher the concentration of surface active material), the quicker and/or easier the bubble is released into the solution, i.e. the higher the frequency and/or the smaller the size of the gas bubbles will be. Generally, this frequency and/or the size of the gas bubbles may be related to the surface tension (and surface active material concentration) in the solution.

WO 92/18680 discloses a washing process for measuring the surface tension by using a tensiometer which differentially measures the pressure fluctuations between two tubes with different diameters. The gas bubbles are generated by using an external gas source with a constant gas flow. As fluctuations in the gas flow from the external gas source may occur, the measurements may not be accurate. Gas flow fluctuations may be overcome with expensive equipment. Addition of gas by way of adding the gas to the wash liquor from a storage tank through a tube system involves high capital investments and a complex system. Such systems further require safety equipment in view of the high pressure.

R. Leung, D.O. Shah, Journal of Colloid and Interface Science, vol. 113-2 (1986) 484-499 and S.G. Oh, S.P. Klein, D.O. Shah, AIChE Journal, vol. 38-1 (1992) 149-152 disclose pressure jump apparats.

We have found a way to determine the surface tension in liquids which overcomes one or more of the above problems.

DEFINITION OF THE INVENTION

The present invention relates to a process of determining surface tension in a liquid by generating gas bubbles in the liquid, whereafter the surface tension in the liquid is determined by way of monitoring gas bubbles, characterised in that the gas bubbles are formed from in-situ generated gas.

Preferably, electrodes are used as a gas bubble generation unit to generate gas in-situ.

Preferably, the generation of gas bubbles is monitored in-situ.

Preferably, electrodes are used as a detection unit to monitor the gas bubbles in-situ.

Preferably, the surface tension is determined by way of measuring the gas bubble frequency (i.e. the frequency of the overpotential fluctuations) at constant electrolysis current, or by measuring the electrolysis current at constant gas bubble frequency and comparing the gas bubble frequency or the current with a calibration line to determine the surface tension in the liquid.

The present invention further relates to a washing process in which an aqueous solution is used and wherein the surface tension of the solution is determined by generating gas bubbles in the solution, whereafter the surface tension in the solution is determined by way of monitoring gas bubbles, characterised in that the gas bubbles are formed from in-situ generated gas and/or gas bubbles are monitored in-situ.

Preferably, the generation of gas bubbles is monitored in-situ, preferably by way of an electrode that is directly attached to the unit that generates gas bubbles.

Preferably, electrodes are used to generate gas in-situ and, preferably, electrodes are used to monitor the gas bubbles in-situ..

The present invention further relates to an apparatus, capable of being used in processes according to the present invention, consisting of a gas bubble generation unit and/or a detection unit to monitor the gas bubble, characterised in that the generation unit in-situ generates gas that forms gas bubbles and/or the detection unit monitors gas bubbles in-situ. Preferably, the detection unit generates a signal that is used for feedback control of the generating unit.

The invention has amongst others the benefit over the prior art that there are no fluctuations in gas flow due to pumps and, further, the present invention allows cheap equipment to be used which is easy to handle and has low maintenance requirements.

## DETAILED DESCRIPTION OF THE INVENTION

### GAS BUBBLE GENERATION

Gas can be generated in-situ to form gas bubble according to the invention by various means including electrolysis, boiling, local heating, chemical reaction with gas evolution, etc. Preferably, gas is generated in-situ by electrolysis, preferably using metal electrodes.

The kind of gas that is generated is not an essential feature of the present invention, although the gas should be compatible with the other ingredients of the system. Preferably, hydrogen gas is produced.

### In-situ gas generation by electrolysis

The kind of gas that is generated in-situ when using an electrodes will be dependent on factors such as the pH of the solution, the kind of electrode (cathode or anode) and the material to be electrolysed (e.g. water and H202). Examples of halfreactions are:

$$\text{cathode:} \quad 2H^+ + 2e^- \rightarrow H_2 \qquad E_0 = +0.00 \text{ V}$$

$$\text{anode:} \quad 2H_2O \rightarrow O_2 + 4H^+ + 4e^- \qquad E_0 = +1.23 \text{ V}$$

occurring in an aqueous acidic environment; and

$$\text{cathode:} \quad 2H_2O + 2e^- \rightarrow H_2 + 2OH \qquad E_0 = -0.83 \text{ V}$$

$$\text{anode:} \quad 4OH \rightarrow O_2 + 2H_2O + 4e^- \qquad E_0 = +0.40 \text{ V}$$

occuring in an aqueous alkaline environment.

It is preferred to generate H2 gas with a cathode working electrode in an aqueous alkaline environment.

To in-situ generate the gas, current carrying working electrodes may be used for electrolysis. It will be understood that in that case also a counter electrode (preferably with a size much bigger, say 100x bigger, than the working electrode) and optionally a reference electrode are used.

When using electrolysis, it is preferred to use a constant current.

### Electrodes

The working electrodes to be used as gas generating electrode, may be made of any conductive material. Selection of the material is dependent on factors such as pH, voltage used, temperature, complex formation with other ingredients, etc. The electrode material is preferably selected from any conducting material, such as Silicon, stainless steel, Gold, Iridium, Platiunum, Rhodium, Ruthenium, Palladium, Mercury, Silver, Osmium, Selenium Tellurium, Pollonium and conducting polymers, such as polyacetylene and polyoxadiazoles, preferably Gold, Iridium, Platiunum, Rhodium, Ruthenium, Mercury, Silver and Osmium and more preferably Gold.

Optionally, the conducting material is supported with substrate material. Examples of such materials are silicon, glass, the electrode material itself, metal and polyimide (Kapton) materials.

The conducting material may preferably be partially insulated on the surface in such a way that only a limited electrode area comes in contact with the solution. Suitable insulating materials show good adherence to the electrode material and have low conductivity. Optionally an additional adhesive layer, e.g. of Ti or a sandwich of Ti and Silicon oxide (thin) layers, is used. Examples of insulator materials are $SiO_2$, $Si_3N_4$, $Ta_2O_5$, polyimide and epoxy resins, etc.

### Flat electrodes

Electrodes for use in the present invention may e.g. be flat plates. Flat plate electrodes generate gas bubbles at random locations (nucleation sites) on the plate.

### Electrodes with well-defined nucleation sites

Nucleation sites on the electrode are located on the surface of the electrode where no insulation material is present. The site is in contact with the liquid and this contact enables in-situ gas generation. Electrodes that produces gas bubbles on well-defined nucleation sites (locations) are preferred over electrodes that produce gas bubbles at random locations (nucleation sites), as they provide better control of the gas generating process. Preferred electrodes have one nucleation site.

Consequently, the present invention preferably makes use of an electrode, being linked to an electrical power source, wherein the electrode has one nucleation site.

Preferably the electrode is selected from the group consisting of microcavity electrodes (MCE), gas phase nucleation core electrodes and gas phase nucleation core electrodes with one (or more) microcavities.

### Microcavity electrodes

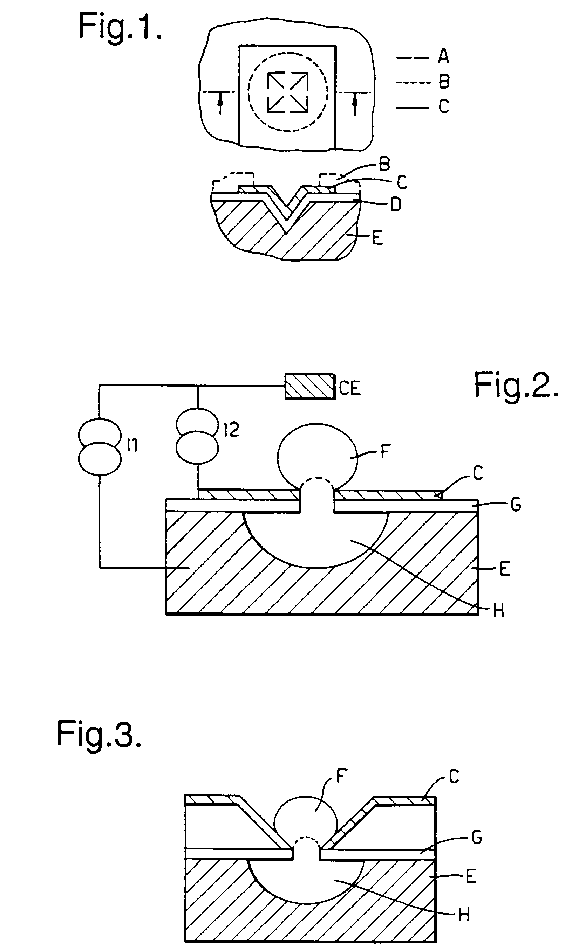

Microcavity electrodes are preferred. Such microcavity electrodes are schematically presented in figure 1. They preferably have one cavity that serves as a nucleation site for the in-situ generation of gas that form gas bubbles. The cavity comprises conductivity material which is in contact with the solution. As a consequence of the electrode shaping, supersaturation of dissolved gas is quicker obtained on the bottom of the cavity than in the bulk of the solution. Due to this supersaturation, nucleation will take place on the bottom of the cavity resulting in one single bubble nucleation site. The cavity acts like a gas concentrator.

### Gas phase nucleation core electrode

Another preferred electrode is a gas phase nucleation core electrode. Such electrodes are schemetically presented in figure 2. They preferably have one cavity that serves as a nucleation site for the in-situ generation of gas and they further have an open connection in the electrode to a space underneath the electrode. This space is filled with gas, e. g. produced by a second electrode, which gas may be different from the gas generated by the other electrode. The gas phase nucleation core electrode is especially preferred as the space filled with gas together with the open connection in the electrode will serve as a nucleation point for the gas generated by the working electrode which is connected to I2 in figure 2. Consequently, the gas bubbles will be produced a well defined nucleation site rather than at random locations.

### Gas phase nucleation core electrodes with microcavities

Another preferred electrode is a gas phase nucleation core electrode with microcavities. These electrodes are a combination of the gas phase nucleation core electrode and the microcavity electrode and are schematically presented in figure 3. They preferably have one microcavity. Gas will be in-situ generated at a well defined nucleation site rather than at random locations.

It is believed that based on the above criteria and his general knowledge, the skilled man will be able to select a suitable electrode that will be able to supersaturate the liquid to electrolytically in-situ generate gas to form monosized gas bubbles in a controlled way on a specified site.

### GAS BUBBLE MONITORING

Gas bubbles can be determined in-situ according to the invention by various means including electrolytical methods (i.e. by measuring impedance, overpotential and/or current), pH, microflows and optical methods, e.g. using light guides, in dependently from the gas bubble generation. Preferably, electrolytical methods are used, more preferably methods involving electrodes.

Preferably, gas bubble generation is monitored in-situ.

Preferably, gas bubbles are monitored in-situ at the electrode that is also used to generate gas bubbles in-situ.

Gas bubble determination measurements may take place in the main stream of the liquid or in a bypass.

Electrodes

Surprisingly, we have found that surface tension in a liquid may preferably be determined by monitoring gas bubbles, preferably gas bubble generation, in-situ with an electrode. We have found that presence of gas bubbles on (or near) the electrode (partially) shields the electrode from the surrounding solution which induces fluctuations on the electrode of electrolytical measurands selected from voltage, current and/or impedance, and that these fluctuations can be related to the surface tension in the liquid.

We have found that the electrodes that have been described above for gas bubbles generation can also, in combination or independently, be used to monitor gas bubble generation.

If a constant current is applied to these electrodes, the frequency of the release of bubbles can be determined by monitoring the voltage overpotential or impedance variation frequency of the electrodes. Likewise, we have found that a constant voltage can be applied to these electrodes whereafter the frequency of the release of bubbles can be determined by observing the current (or impedance) variation frequency. The concentration of a surface active material can then be determined using a calibration curve showing the concentration of the specific surface active material as a function of the bubble frequency.

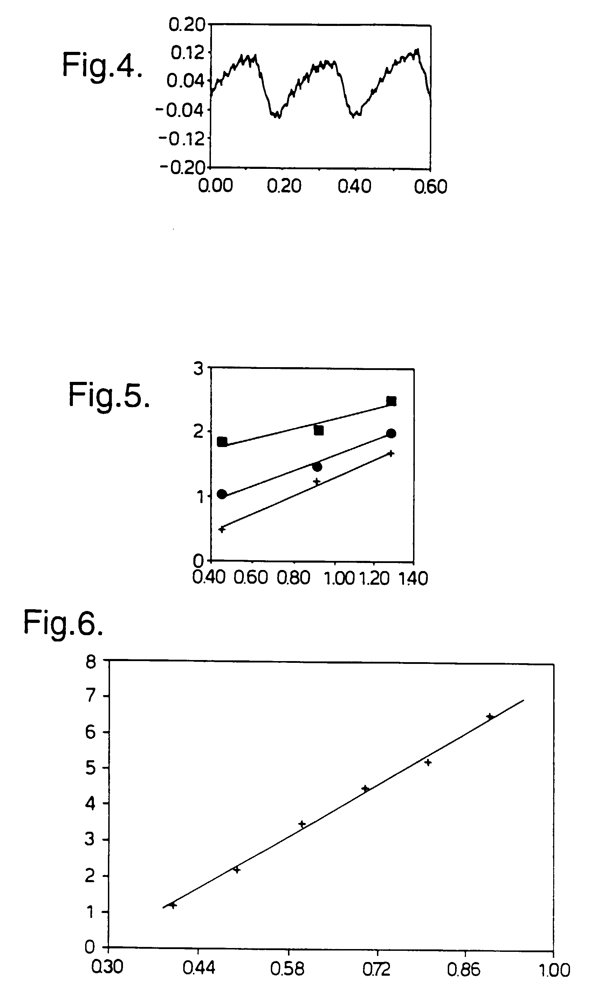

A typical measured wave form is represented in figures 4 and 10 (overpotential measurements) and figure 11 (impedance measurements). This figure shows the fluctuations for a surfactant solution as measured with a microcavity electrodes (which also generates gas bubbles) versus the time. Figure 5 shows the dependency of the bubble frequency on the surfactant concentration (dynamic surface tension) at various electolysis currents for a nonionic surfactant (Synperonic NP9) in a 10mM Na2SO4 solution. This curve is an example of a calibration curve.

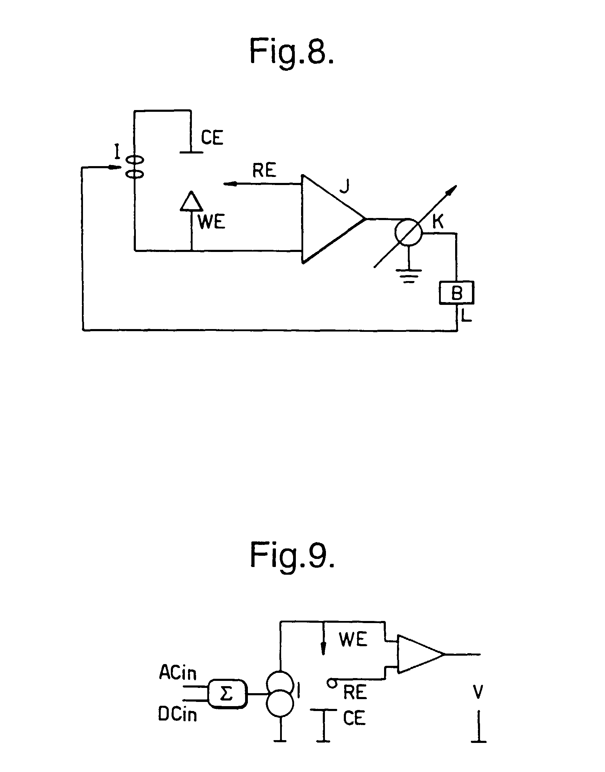

Impedance variation due to gas bubble generation may also be observed electronically by the detection unit if an additional high frequency signal is applied on the working electrode (see figure 9 for the set-up and figure 10 for the impedance measurements).

In addition, the applied current or voltage may be chosen such as to maintain a constant bubble frequency by applying a feedback system. In that case, the concentration of a surface active material can be determined by using a calibration curve showing the concentration of the specific surface active material as a function of the applied current or voltage.

In some cases, e.g. when using a plate electrode, it may be necessary to use the predominant bubble frequency. This bubble frequency can for example be determined using stochastic analysis, as e.g. has been described in C. Gabrielli, F. Huet, M. Keddam, A. Sahar, Journal of Applied Electrochemistry, 19 (1989), 683-696.

It is however preferred to use electrodes with one nucleation site, preferably a microcavity electrode, a gas phase nucleation core electrode or a gas phase nucleation core electrode with one (or more) microcavity. It will be understood that stochastic analysis is not excluded when using these electrodes.

To improve the method of surface tension measurements, an array of electrodes may be used that form gas bubbles at different rates.

APPARATUS

As indicated, the present invention also relates to an apparatus that is capable of being used in processes according to the present invention. The apparatus consists of a gas bubble generating unit and/or a detection unit to monitor the gas bubble, wherein the generating unit in-situ generates gas that form gas bubbles and/or the detecting unit monitors gas bubbles in-situ, preferably the gas bubble generation.

Preferably, the detection unit generates a signal that is used for feedback control of the generating unit.

Figure 8 is a schematical representation of an electrical circuit that may be used in an apparatus according to the invention. The electrodes that are marked with CE (Counter Electrode), RE (Reference Electrode) and WE (Working Electrode) are placed in the solution of which the surface tension is to be determined. I represents a power source of the generating unit. J is an amplifier that is preferably present. K is the meter of the detecting unit. Preferably the apparatus contains a feedback control L from the detection unit to the generating unit. The generating unit consists of I, CE and WE and the detecting unit consists of WE, CE, optionally RE, J, Land optionally K.

Figure 9 is a schematical representation of an electrical circuit that may be used in an apparatus according to the invention (see e.g. Example 6). The electrodes that are marked with CE (Counter Electrode), RE (Reference Electrode) and WE (Working Electrode) are placed in the solution of which the surface tension is to be determined. I is the electrolysis current of a voltage controlled current csource. Acin and DCin are the control voltages applied to the current source by means of the summing amplifier $\Sigma$. V corresponds to the measured overpotential and impedance fluctuations.

LIQUIDS WITH SURFACE ACTIVE MATERIAL

Any liquid with any conductivity can in principle be electrolysed if the voltage across the electrolytic cell is high enough, although care should be taken that there will be ohmic losses with decreasing conductivity. Suitable media for gas bubble generation and/or monitoring by way of electrolysis are aqueous liquids that e.g. contain surface active material (and supporting electrolyte).

The present invention allows the measurement of the concentration of surface active measurement in general and is not limited to certain surfactant classes. The measurements can be controlled by the electrolysis current (density) used. This can be easily adapted to any type of species that influence the surface tension.

Surface tension can be measured in solutions of surface active material but also sequentially and/or differentially in a solution of surface active material and, for instance, in tap water.

IN-SITU CLEANING OF ELECTRODE

Surprisingly, we have found that the electrode that are used in the processes according to the invention can be easily and effectively cleaned in-situ. This can be effected by reversing the electrolysis current for a certain (preferably short) time period (i.e. in the order of minutes or even seconds).

FIGURES

Figure 1 is a schematical representation (top and cross-sectional view) of a microcavity electrode (MCE) having one bubble nucleation site. The following reference codes are used:

A = Cavity
B = Polyimide (window)
C = Working electrode (gold)
D = Silicon dioxide
E = Silicon

Figure 2 is a schematical representation (cross sectional view) of a gas phase nucleation core electrode. Also shown is an electrode configuration for bubble generation. The following codes are used:

F = Bubble
C = Working electrode (gold)
G = Silicon Nitride
E = Silicon
H = Nucleation core
I1 = Power source for generating gas in nucleation core
I2 = Power source for working electrode (gold)
CE = Common counter electrode

Figure 3 is a schematical representation (cross sectional view) of an electrode that combines the gas phase nucleation core with the cavity electrode. The following reference codes are used:

C = Working electrode (gold)
F = Bubble
H = Silicon Nitride
E = Silicon
H = Nucleation core

Figure 4 is a typcial wave form of the measured overpotential fluctuations (Y-axis) versus time (X-axis; in s) on a microcavity electrode at a current of 7.97$\mu$A, in 10mM Na2SO4 with 0.4 g/l Synperonic NP9.

Figure 5 shows the bubble frequency (Y-axis; in Hz) versus the nonionic surfactant concentration in a 10mM CH3COONa solution (X-axis; in g/l) at various currents (+ is 4.8$\mu$A; $\Delta$ is 5.3$\mu$A; O is 6.0 $\mu$A).

Figure 6 shows the bubble frequency (Y-axis; in Hz) versus the nonionic surfactant concentration in tap water (X-axis; in g/l) at a current of 2.017µA.

Figure 7 shows the bubble frequency (Y-axis; in Hz) versus the nonionic surfactant concentration in tap water (X-axis; in g/l) at various currents (+ is 6.8µA; Δ is 2.0 µA).

Figure 8 is a schematical representation of an electrical circuit that may be used in an apparatus according to the invention. The following reference codes are used:

CE = Counter Electrode
RE = Reference Electrode
WE = Working Electrode
I = Power source
J = Amplifier
K = Meter of detection unit
L = Feedback control from the detection unit to generating unit.

Figure 9 is a schematical representation of an electrical circuit that may be used in an apparatus according to the invention The following reference codes are used:

CE = Counter Electrode
RE = Reference Electrode
WE = Working Electrode
I = Power source
ACin and DCin = control voltages applied to the current source
Σ = summing amplifier
V = the measured overpotential and impedance fluctuations

Figure 10 is a typical wave form of the measured overpotential fluctuations (Y-axis) versus time (X-axis; in s) on a microcavity electrode at a current of 5.93µA, in 10mM Na2Ac with 0.8 g/l Synperonic NP9.

Figure 11 is a typical wave form of the impedance fluctuations (Y-axis) versus time (X-axis; in s) on a microcavity electrode at a current of 5.93µA, in 10mM Na2Ac with 0.8 g/l Synperonic NP9.

EXAMPLES

Example 1

Micro-Cavity-Electrodes were prepared with silicon wafers having a <100> cystral orientation. Microcavities were etched in KOH (33% wt) through a SiO2 mask. A sandwich of Ti/Au/Ti with a thickness of 25/250/25 nm, respectively, was evaporated and partterned on the wafers. The active area of the MCEs was defined with a sandwich of SiO2, Si3N4, and photo curable polimide. At the end of this patterning process, the titanium top layer was removed, allowing the gold surface a free contact with the aqueous solution. The active area of the microelectrodes was determined by the SiO2, Si3N4 polyimide window, a square of 60x60µm2. It should be noted that the polyimide cannot be directly deposited on the electrode metal because of its capability to undergo redox reactions in electrolyte solutions and the SiO2, Si3N4 layer was included to avoid this problem. The wafers was cut into pieces and the chips was mounted on 8x100 mm2 printed circuit board carriers and then encapsulated in epoxy resin.

Example 2

A nonionic surfactant (Synperonic NP9) solution of 0.4 g/l was prepared in a 10 mM NaSO4 aqueous solution. A microcavity electrode with the characteristics of the electrode of Example 1, according to figure 1 having one nucleation site and consisting of a gold layer as conducting material, having a polyimide insulating layer and made on a silicon substrate, was put in the solution and connected to a current source. The electrode generates $H_2$ gas bubbles. A constant current of 7.97 µA was applied and the overpotential of the electrode was plotted versus time.

The results are shown in figure 4 and show overpotential fluctuations as a consequence of bubble generation at the working electrode. The frequency in the figure is about 5 Hz (0.2s period).

Example 3

Various nonionic surfactant (Synperonic NP9) concentrations were made in a 10 mM NaCH3COO solution. A microcavity electrode with the characteristics of the electrode of Example 1 was put in the solution and connected to a current source. The electrode generates $H_2$ gas bubbles, the overpotential of the electrode was measured and the bubble frequency was determined, at various applied currents.

The results are plotted in figure 5 which shows that the bubble frequency increases with increasing nonionic surfactant concentration (decreasing dynamic surface tension) and also with increasing current (higher gas generation rate). This is an example of a calibration curve that can be used for determining the surface tnesion of a solution, e.g. of the unknown concentration of a solution of Synperonic NP9 in a 10 mM NaCH3COO solution.

Example 4

Various nonionic surfactant (Synperonic NP9) concentrations were made in tap water. A microcavity electrode with the characteristics of the electrode of Example 1 was put in the water and connected to a current source. The electrode generates $H_2$ gas bubbles. Bubble frequencies were monitored (by way of measuring the overpotential changes at the gas bubble generating electrode) at a constant current of 2.017μA.

The results are plotted in figure 6 which shows that the bubble frequency increases with increasing nonionic concentrations.

Example 5

Various nonionic surfactant (Synperonic NP9) concentrations were made in tap water. A microcavity electrode with the characteristics of the electrode of Example 1 was put in the water and connected to a current source. The electrode generates $H_2$ gas bubbles. Bubble frequencies were monitored (by way of measuring the overpotential changes at the gas bubble generating electrode) at various currents.

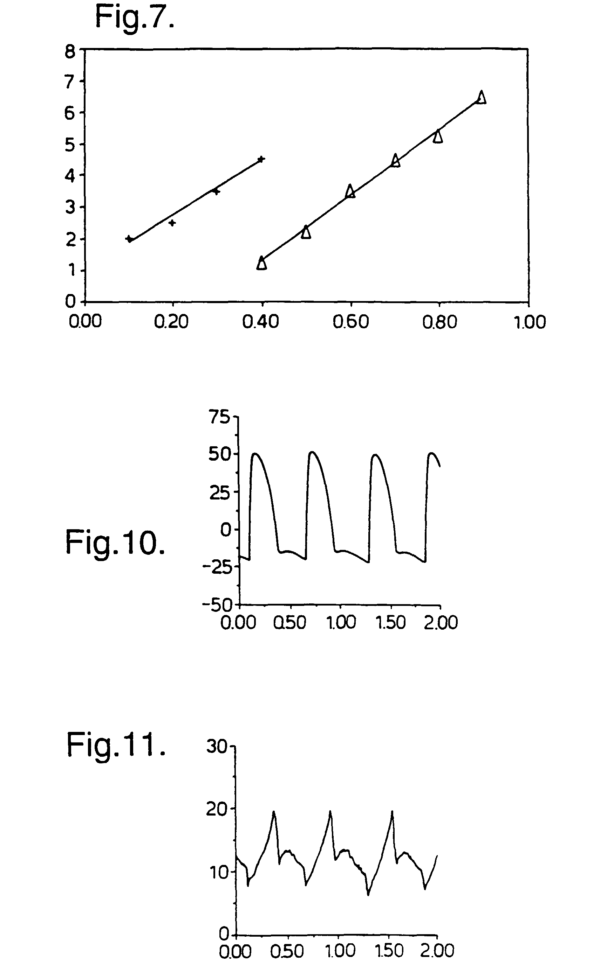

The results are plotted in figure 7 which shows that the bubble frequency increases with increasing nonionic concentrations and also with increasing current (higher gas generation rate). The figure shows that it is possible to extend the measurable surfactant concentration range by varying the electrolysis current.

Example 6

A nonionic surfactant (Synperonic NP9) solution of 0.8 g/l was prepared in a 10 mM NaAc and 10 mM Na2S04 aqueous solution. A microcavity electrode of Example 1, according to figure 1 having one nucleation site and consisting of a gold layer as conducting material, having a polyimide insulating layer and made on a silicon substrate, was put in the solution and connected to a current source. The electrode generates $H_2$ gas bubbles. A constant current of 5.93 μA was applied and the overpotential of the electrode was plotted versus time. A measurement set-up as shown in figure 9 was used wherein a signal with a frequency of 100kHz and a small amplitude (typically 50mVpp) was added to the control voltage of the current source by means of a summing amplifier, Σ. The amplitude of this small signal voltage was chosen in such a way that also the fluctuations of the resulting current could be considered small signal.

The measured overpotential fluctuations, as a consequence of bubble generation at the working electrode, are shown in figure 10. Figure 11 is a a graph on the impedance fluctuations as a consequence of bubble generation at the working electrode. The frequency is about 0.56 Hz.

**Claims**

1. Process of determining surface tension in a liquid by generating gas bubbles in the liquid, whereafter the surface tension in the liquid is determined by way of monitoring gas bubbles, characterised in that the gas bubbles are formed from in-situ generated gas.

2. Process according to claim 1, wherein the gas bubbles are monitored at the point where they are generated.

3. Process according to claims 1, wherein electrodes are used and wherein the gas bubbles are monitored at the electrode that is also used to generate the gas bubbles.

4. Process according to claims 1-3, wherein the surface tension is determined by way of measuring the gas bubble frequency at constant electrolysis current, or by measuring the electrolysis current at constant gas bubble frequency and comparing the gas bubble frequency or the current with a calibration line to determine the surface tension in the liquid.

5. Washing process in which an aqueous solution is used and wherein the surface tension of the solution is determined by generating gas bubbles in the solution, whereafter the surface tension in the solution is determined by way of monitoring the gas bubbles, characterised in that the gas bubbles are formed from in-situ generated gas and the gas bubbles are monitored at the point where they are generated.

6. Apparatus, capable of being used in a process according to claims 1-5, comprising a gas bubble generating unit and a detection unit to monitor gas bubbles, characterised in that the generation unit in-situ generates gas that form gas bubbles and the detection unit monitors gas bubbles at the point where they are generated.

7. Apparatus according to claim 6, wherein the detection unit generates a signal that is used for feedback control of the gas bubble generating unit.

**Patentansprüche**

1. Verfahren zur Bestimmung der Oberflächenspannung einer Flüssigkeit durch Erzeugen von Gasbläschen in der Flüssigkeit, wonach die Oberflächenspannung in der Flüssigkeit durch Überwachung von Gasbläschen bestimmt wird, dadurch gekennzeichnet, daß die Gasbläschen aus in situ erzeugtem Gas gebildet werden.

2. Verfahren nach Anspruch 1, worin die Gasbläschen an dem Punkt überwacht werden, wo sie erzeugt werden.

3. Verfahren nach Anspruch 1, worin Elektroden verwendet werden und worin die Gasbläschen an der Elektrode überwacht werden, die ebenfalls zur Erzeugung der Gasbläschen verwendet wird.

4. Verfahren nach einem der Ansprüche 1 bis 3, worin die Oberflächenspannung durch Messen der Gasbläschen-Frequenz bei konstantem Elektrolysestrom, oder durch Messen des Elektrolysestroms bei konstanter Gasbläschen-Frequenz bestimmt wird und die Gasbläschen-Frequenz oder der Strom mit einer Kalibrationslinie zur Bestimmung der Oberflächenspannung in der Flüssigkeit verglichen wird.

5. Waschverfahren, in welchem eine wässerige Lösung verwendet wird und worin die Oberflächenspannung der Lösung durch Erzeugen von Gasbläschen in der Lösung bestimmt wird, wonach die Oberflächenspannung in der Lösung durch Überwachen der Gasbläschen bestimmt wird, dadurch gekennzeichnet, daß die Gasbläschen aus von in situ erzeugtem Gas gebildet sind und die Gasbläschen an dem Punkt überwacht werden, wo sie erzeugt wurden.

6. Apparat, der fähig ist, in einem Verfahren nach den Ansprüchen 1 bis 5 verwendet zu werden, enthaltend eine Gasbläschen erzeugende Einheit und eine Nachweiseinheit zur Überwachung der Gasbläschen, dadurch gekennzeichnet, daß die erzeugende Einheit in situ Gas erzeugt, das Gasbläschen bildet und die Nachweiseinheit Gasbläschen an dem Punkt überwacht, wo sie erzeugt wurden.

7. Apparat nach Anspruch 6, worin die Nachweiseinheit ein Signal erzeugt, das für die Rückführkontrolle der Gasbläschenerzeugenden Einheit verwendet wird.

**Revendications**

1. Procédé de mesure de la tension superficielle d'un liquide en générant des bulles de gaz dans le liquide, après quoi on détermine la tension superficielle du liquide en détectant des bulles de gaz, caractérisé par le fait que les bulles de gaz se forment à partir d'un gaz généré in situ.

2. Procédé selon la revendication 1, dans lequel on détecte des bulles de gaz au point où elles sont générées.

3. Procédé selon la revendication 1, dans lequel on utilise des électrodes et dans lequel on détecte les bulles de gaz à l'électrode qui sert également à générer les bulles de gaz.

4. Procédé selon les revendications 1-3, dans lequel on détermine la tension superficielle en mesurant la fréquence de libération des bulles de gaz à courant d'électrolyse constant ou en mesurant le courant d'électrolyse à fréquence de génération des bulles de gaz constante et en comparant la fréquence de génération des bulles de gaz ou le courant avec une courbe d'étalonnage pour déterminer la tension superficielle du liquide.

5. Procédé de lavage dans lequel on utilise une solution aqueuse et dans lequel on détermine la tension superficielle de la solution en générant des bulles de gaz dans la solution, après quoi on détermine la tension superficielle dans la solution en détectant les bulles de gaz, caractérisé par le fait que les bulles de gaz se forment à partir du gaz généré in situ et que l'on détecte les bulles de gaz au point où elles sont générées.

6. Appareil pouvant être utilisé dans un procédé conforme aux revendications 1-5, comportant un organe de génération de bulles de gaz et un organe de détection pour détecter les bulles de gaz, caractérisé par le fait que l'organe de génération génère, in situ, du gaz qui forme des bulles de gaz et que l'organe de détection détecte les bulles de gaz au point où elles sont générées.

7. Appareil selon la revendication 6, dans lequel l'organe de détection produit un signal utilisé pour commander, en rétroaction, l'organe de génération des bulles de gaz.

Fig.1.

- - - A
...... B
——— C

Fig.2.

Fig.3.

Fig.4.

Fig.5.

Fig.6.

Fig.7.

Fig.10.

Fig.11.

# Fig.8.

# Fig.9.